# Europäisches Patentamt
# European Patent Office
# Office européen des brevets

(19)

(11) Veröffentlichungsnummer: **0 035 695**
**B1**

(12) **EUROPÄISCHE PATENTSCHRIFT**

(45) Veröffentlichungstag der Patentschrift:
13.04.83

(51) Int. Cl.³: **C 01 D 3/08**

(21) Anmeldenummer: **81101346.5**

(22) Anmeldetag: **25.02.81**

(54) Verfahren und Vorrichtung zur Herstellung wässriger Natriumchlorid-Lösungen aus Steinsalz.

(30) Priorität: **06.03.80 DE 3008563**

(43) Veröffentlichungstag der Anmeldung:
**16.09.81 Patentblatt 81/37**

(45) Bekanntmachung des Hinweises auf die Patenterteilung:
**13.04.83 Patentblatt 83/15**

(84) Benannte Vertragsstaaten:
**DE FR IT SE**

(56) Entgegenhaltungen:
**CA-A-885 913**
**DE-A-2 215 949**
**DE-C-2 643 341**
**FR-A-1 578 208**
**US-A-1 928 008**
**US-A-2 551 494**
**US-A-3 130 016**
**US-A-3 365 280**
**US-A-3 623 848**

(73) Patentinhaber: **HOECHST AKTIENGESELLSCHAFT,
Postfach 80 03 20, D-6230 Frankfurt/Main 80 (DE)**

(72) Erfinder: **Benninger, Siegfried, Dr., Mecklenburger
Strasse 37, D-6231 Schwalbach (DE)**
Erfinder: **Reining, Karl, Sendelbacher Weg 19,
D-6233 Kelkheim (Taunus) (DE)**
Erfinder: **Krasel, Werner, Brückenstraśse 53,
D-6238 Hofheim am Taunus (DE)**

## Verfahren und Vorrichtung zur Herstellung wäßriger Natriumchlorid-Lösungen aus Steinsalz

Die vorliegende Erfindung betrifft ein kontinuierliches Verfahren zur Auflösung von Steinsalz mittels Wasser oder Dünnsole in einer Lösekammer unter Bildung von konzentrierter Natriumchlorid-Lösung.

Für die technische Elektrolyse von Natriumchlorid zur Erzeugung von Chlor und Natronlauge müssen laufend große Mengen Salz in Lösung gebracht werden. Hierbei arbeitet man heute fast ausschließlich mit geschlossenem Solekreislauf, d. h. das in den Elektrolysezellen verbrauchte Salz wird durch erneutes Sättigen der Dünnsole mit festem Salz ergänzt.

Bei Einsatz von rückstandsfrei löslichem Siedesalz oder Meersalz werden allgemein sogenannte Schnellöser als Löseapparate bevorzugt. In diese Behälter, die meist nach unten konisch zulaufen, wird von oben kontinuierlich festes Salz zudosiert. Die in den Konus oder am Boden eingeleitete Dünnsole durchströmt die Salzschüttung von unten und wird als aufgesättigte »Rohsole« an einem Überlauf entnommen.

Zur Auflösung von Steinsalz, das sich aufgrund seines Gangart- und/oder Anhydrit-Gehaltes nicht rückstandsfrei löst, sind andere Schnellöser-Konstruktionen bekanntgeworden (vgl. BE-A-2 643 341, US-A-3 130 016, US-A-3 623 848 und US-A-2 551 494). In der Praxis konnten sich diese Schnellöser jedoch nicht allgemein durchsetzen. Das beruht auf technischen Schwierigkeiten, die durch den starken Materialverschleiß am Gangart-Austrag hervorgerufen werden, und die dadurch bedingte hohe Reparaturanfälligkeit.

Bei Chloralkali-Elektrolysen besteht das Problem, elektrische Energieverluste als überschüssige Wärme aus dem Solekreislauf abzuführen und die Wasserbilanz des Solekreislaufs im Gleichgewicht zu halten. Insbesondere ist bei der Elektrolyse mit Quecksilberzellen meist ein Ausschleusen von Wasser erforderlich. In dem Bemühen die Emission quecksilberhaltiger Abwässer zu vermeiden, werden diese soweit als möglich in den Solekreislauf eingeleitet, so daß die gesamten Wasserzuläufe den Wasserverbrauch des Prozesses übersteigen.

Die Wasserabtrennung geschieht meist durch die offene Verdampfung heißer Sole. Dabei ist besonders bei Einsatz von Steinsalz die räumliche Einheit von Verdampfungskühlung, Löseprozeß und Salzlager die am meisten verbreitete Lösung. In der Praxis wird in den zur Lagerung dienenden Behältern oder Tassen Dünnsole auf die Salzschüttung gespritzt, wobei es bereits teilweise zur Auflösung kommt. Die notwendige Wasserverdampfung kann sehr einfach durch entsprechende Steuerung des Spritzvorgangs erreicht werden. Das Salz kann durch den Solestrahl leicht als Maische aus dem eigentlichen Salzlager ausgeschwemmt und in nachgeschalteten Solerinnen und/oder -Behältern vollständig gelöst werden. Auf diese Weise kann auch das Absetzen der Gangart im Lager vermieden werden; diese wird vielfach in eigenen Gangart-Abscheidern verschiedener Konstruktion, die der Lösestation nachgeschaltet sind, zurückgehalten.

Gegenüber Schnellösern hat dieses Verfahren die zusätzlichen Vorzüge, daß der Bau überdachter Trockenlager und der zusätzliche Förderaufwand für die kontinuierliche Dosierung vom Lager zum Lösebehälter unnötig werden.

Neuere Untersuchungen haben jedoch gezeigt, daß die Dampfbrüden, die bei dieser offenen Verdampfung der Dünnsole entstehen, einen korrosiven Salzspray enthalten und daß bei Einsatz von Dünnsole aus dem Amalgam-Prozeß darüber hinaus Quecksilberspuren vorhanden sind.

Es bestand daher die Aufgabe, zur Vermeidung von Quecksilberemissionen ein Löseverfahren zu finden, das die Vorzüge des offenen Salzlagers aufweist, aber die Entstehung von Solebrüden vermeidet. Dieses Verfahren sollte auch die Entfernung des sich allmählich ansammelnden unlöslichen Gangart-Rückstandes ohne Schwierigkeiten ermöglichen. Die vorliegende Erfindung löst diese Aufgabe.

Es wurde nun ein Verfahren zur brüdenfreien Herstellung konzentrierter wäßriger Natriumchlorid-Rohsole gefunden, bei dem Steinsalz kontinuierlich in einer offenen Lösekammer aufgelöst wird, die eine Steinsalzschüttung enthält, wobei die an Salz ungesättigte Sole mit der Steinsalzschüttung in Kontakt kommt, sich dabei mit Natriumchlorid sättigt und die Lösekammer wieder verläßt. Das Verfahren ist dadurch gekennzeichnet, daß die an Salz ungesättigte Sole am Boden der Lösekammer eindringt, die Steinsalzschüttung durchdringt, die gesättigte Rohsole die Lösekammer durch ein vertikales oder geneigtes Sieb wieder verläßt, welches suspendierte Steinsalzteilchen weitgehend zurückhält, der Flüssigkeitsspiegel der gesättigten Rohsole in der Lösekammer die Oberfläche der Steinsalzschüttung nicht erreicht und die dem Inneren der Lösekammer zugewandte Seite des Siebes vollständig mit Steinsalz/Sole-Maische bedeckt ist.

Es ist für ein günstiges Verhältnis von Filtrationsleistung/Volumen der Salzschüttung vorteilhaft, wenn die verwendete Lösekammer langgestreckt ist und die Siebe an den Längsseiten der Kammer angeordnet sind.

Da sehr feine Natriumchlorid-Teilchen — in Abhängigkeit von der Filtriergeschwindigkeit — in fester Form das Sieb passieren können, ist es sinnvoll, die so möglicherweise übersättigte Sole sicherheitshalber durch Zugabe von Dünnsole so weit zu verdünnen, daß bei kleinen Temperaturschwankungen ein Auskristallisieren von Natriumchlorid nicht zu befürchten ist. Angestrebt werden dabei Konzentrationen von 305 bis 310 g Natriumchlorid pro Liter.

Beim erfindungsgemäßen Verfahren ist kein zusätzlicher Aufwand für die Dosierung des Salzes nötig; vielmehr genügt das übliche, chargenweise Auffüllen des Lagers, wobei naturgemäß mit fortschreitendem Salzverbrauch die freie Soleoberfläche zum Vorschein kommen kann. Zu diesem Zeitpunkt soll in das Lager erneut Steinsalz eingeführt werden.

Es ist dabei vorteilhaft, zur Sicherung einer kontinuierlichen Soleversorgung das Salzlager in mehrere parallel geschaltete Lösekammern zu unterteilen. Durch rechtzeitiges Anfahren einer neuen Kammer kann dabei ein Abfallen der Rohsole-Konzentration wegen Erschöpfung einer einzelnen Kammerfüllung vermieden werden.

Da beim erfindungsgemäßen Verfahren Sole nicht mehr von oben auf das Salzlager aufgespritzt wird, kommt es zu einer wesentlich geringeren Brüdenbildung. Daher wird auch die Temperaturdifferenz zwischen der Sole vor und der Sole nach der Salzlösestation stark (auf etwa 1° C) verringert. Dies bedingt natürlich andere Maßnahmen zur Entfernung von Wasser und der Verlustwärme, z. B. eine Entquickung der im Betrieb anfallenden Abwässer und/oder die Ausschleusung von Kondensaten, die bei der Vakuum-Entchlorung oder Chlorkühlung gewonnen werden. Zweckmäßigerweise wird man eine Dünnsole-Vakuumeindampfung der Solesättigung vorschalten.

Durch die Parallelschaltung mehrerer Lösekammern kann auch die Gangart, die sich im Laufe der Betriebszeit auf den Böden ansammelt, ohne Beeinträchtigung der Soleversorgung entfernt werden.

Der Zeitpunkt einer fälligen Gangart-Entleerung wird durch den Abfall der Konzentration der Rohsole der entsprechenden Kammer angezeigt. Zur restlichen Auslaugung der Gangart kann man für jede Lösekammer einen eigenen geschlossenen Solekreislauf vorsehen. Das bedeutet, daß die nur unvollständig aufgesättigte Rohsole noch nicht in den Solekreislauf der Elektrolyse abgegeben wird, sondern vorher erneut durch die Salzschüttung gepumpt wird. Erst nach Erreichen der Sättigungskonzentration (gegebenenfalls wiederholte Passagen) wird die Sole in den großen Solekreislauf eingeschleust. Man kann die unvollständig aufgestärkte Sole unter Umgehung des mehrfachen Umpumpens aber auch direkt in den Dünnsole-Kreislauf zurückpumpen. Diese Behandlung der Gangart wird so lange fortgesetzt, bis die Gangart größtenteils oder vollständig frei von Natriumchlorid ist. Danach wird die Gangart durch laufende Dünnsolespülung aus der Kammer geschwemmt und die Lösekammer mit frischem Steinsalz gefüllt.

Das erfindungsgemäße Verfahren kann nach einer Umrüstung in bereits bestehenden Salzlagern durchgeführt werden, die als kombinierte Solesättiger und Verdampfungskühler betrieben werden. Wirtschaftlich vorteilhaft ist das erfindungsgemäße Verfahren besonders für solche Anlagen, deren Solekreislauf aus Werksstoffgründen es nicht zuläßt, daß nennenswerte Mengen Hypochlorit oder Chlor zugegeben werden, die zu einer Erhöhung des Redoxpotentials der Sole und damit zur Verminderung der Quecksilber-Emission durch Brüden führen würden.

Besonders bewährt zur Durchführung des erfindungsgemäßen Verfahrens haben sich Apparate, die aus einer Lösekammer zum Auflösen von Steinsalz mit Vorrichtungen zum Zuführen von an Salz ungesättigter Sole und zur Abführung von gesättigter Rohsole bestehen, und die dadurch gekennzeichnet sind, daß auf dem Boden der Lösekammer Rohre für die Zuleitung von ungesättigter Sole angeordnet sind, die Lösekammer einen langgestreckten Grundriß aufweist und in Längsrichtung der Lösekammer mindestens ein vertikales oder geneigtes Sieb angeordnet ist, das für Sole, aber nicht für festes Steinsalz durchlässig ist und das in der Lösekammer einen salzfreien Raum abgrenzt.

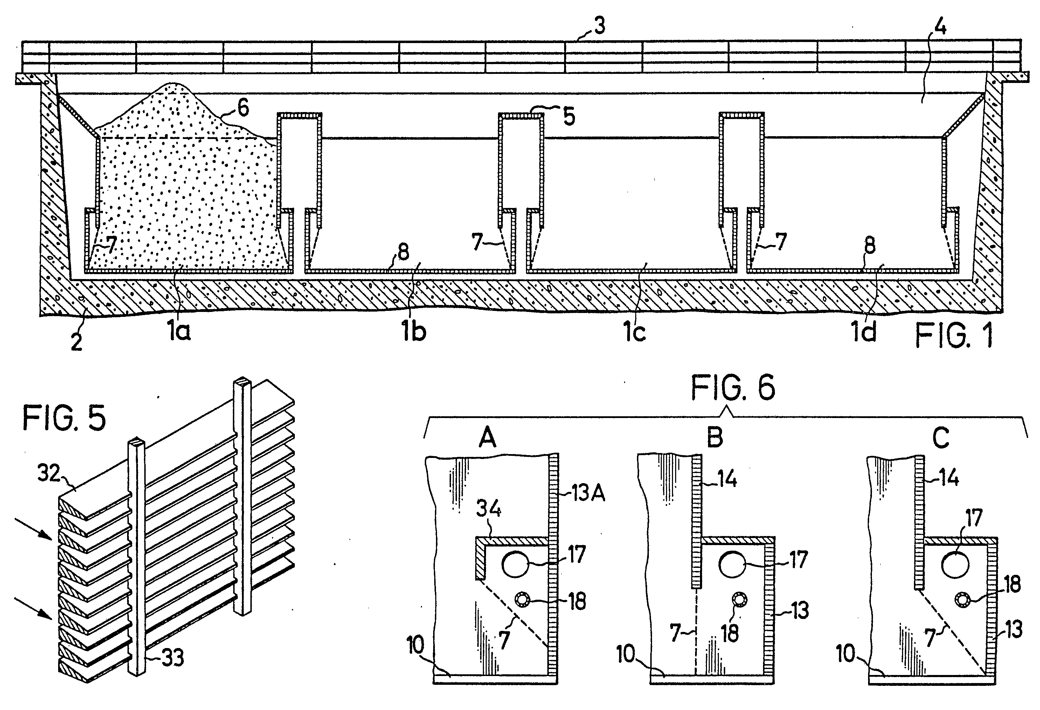

Anhand der Fig. 1 bis 3 soll eine solche Apparatur näher beschrieben werden.

Fig. 1 zeigt im Querschnitt die Anordnung mehrerer Lösekammern (1a bis 1d) in einer aus Beton gefertigten Tasse (2). Es bedeuten dabei (3) ein Laufgitter, (4) eine aufgesetzte Einfüllhilfe (Einfülltrichter für Steinsalz), (6) eine Steinsalzschüttung und (5) eine Abdeckung zwischen zwei Lösekammern. Gesättigte Sole wird nach ihrer Bildung vom festen Salz durch die Siebe (7) abgetrennt und an den Stirnseiten der Lösekammern entnommen. Der Boden (8) der Lösekammer besteht vorzugsweise aus Holz. Nicht gezeichnet sind die Konstruktion des Holzbodens, das Solesystem, sowie die Holzbalken zwischen Boden und Betontasse, die die Lösekammern nach unten abstützen.

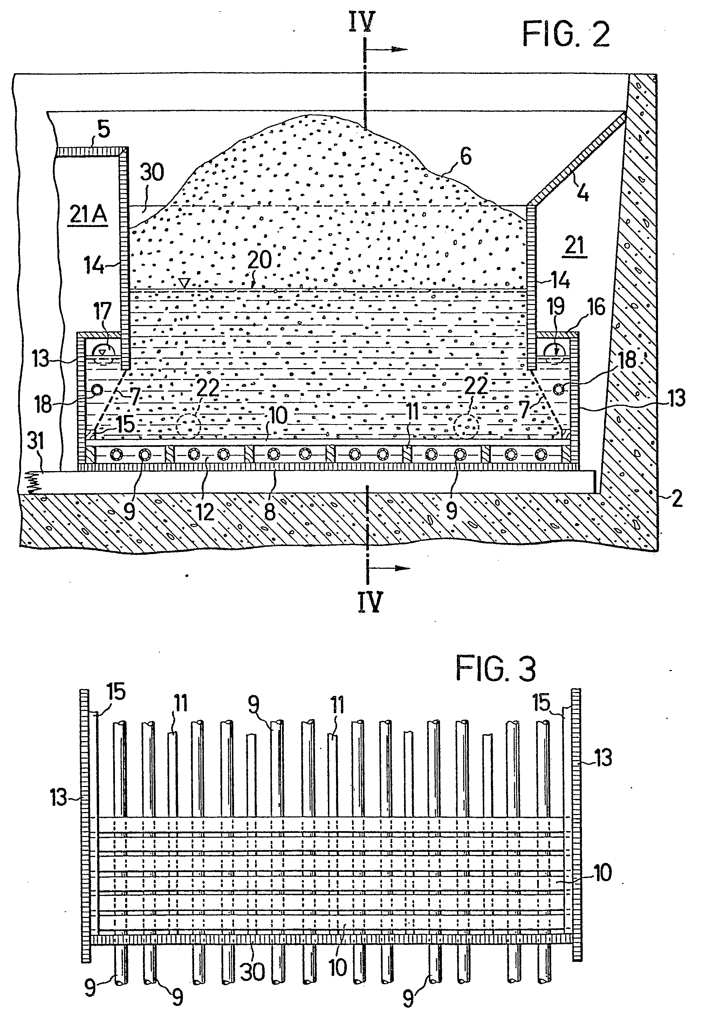

Fig. 2 zeigt, ebenfalls im Querschnitt, eine einzelne Lösekammer. Es bedeuten (9) Zuführleitungen für Dünnsole, (10) Querbalken (aus Holz), einen Rost bildend, (11) Holzstützen für den Rost (10) in Längsrichtung der Kammer liegend, (12) einen Zwischenraum, der mit Sole und eventuell grobem Kies gefüllt ist und (31) einen stützenden Holzbalken zwischen Boden und Betontasse. Die Längswand der Lösekammer wird bei der dargestellten Kammer gebildet aus einem unteren Teil (13) und einem oberen Teil (14). Beide können mit einer Abdeckung (16) für die abgetrennte Rohsole (17) verbunden sein. Die Siebe (7) verlaufen in der dargestellten Kammer zwischen dem oberen Teil (14) der Längswand und dem Längsbalken (15) am Boden der Lösekammer. An einer Stirnseite der Lösekammer ist für jedes Sieb (7) eine Öffnung (17) zum Abführen der gesättigten Rohsole (»Rohsoleablauf«) vorhanden. (19) bedeutet den Spiegel der Rohsole auf Höhe dieser Öffnung, (20) den Spiegel der Sole im Innern der Steinsalz-Schüttung (6). In den Zwischenräumen (21) zwischen Tasse und Lösekammer oder zwei Lösekammern (21A) befinden sich (nicht gezeichnete) massive Stützwände aus Holz zum Abfangen des seitlichen Druckes. Die Öffnung (22) an der Stirnseite dient zum Herausschwemmen der Gangart nach Erschöpfung der Füllung der Lösekammer. Zur Herstellung von konzentrierter Rohsole tritt die an Salz ungesättigte Sole am Boden der Lösekammer durch die Rohre (9) ein; sie durchdringt die Steinsalz-Schüttung (6) und verläßt als gesättigte Rohsole die Steinsalz-Schüttung durch die Siebe (7), wobei suspendierte Steinsalz-Teilchen weitgehend zurückgehalten werden. Es ist zu erkennen, daß die dem Inneren der Lösekammer zugewandten Seiten der Siebe (7) vollständig mit einem Gemisch aus gesättigter Rohsole und Steinsalz bedeckt sind und der Flüssigkeitsspiegel der Rohsole in der Lösekammer die Oberfläche der Steinsalzschüttung nicht erreicht.

Fig. 3 zeigt im Grundriß einen Teil der Lösekammer von Fig. 2. Der Boden (8) der Lösekammer ist dabei nicht dargestellt.

Für die tragenden Elemente der Lösekammern ist Holz ein bevorzugter Konstruktionswerkstoff, beispielsweise in Form von Tannenholzplatten, die mit Phenol-Formaldehydharz verleimt sind. Gegen den mechanischen Angriff der Salz-Schüttung auf die Holzoberfläche der Lösekammern schützt man am besten die Innenseite mit leicht auswechselbaren Verschleißschichten. Solche Verschleißschichten können z. B. aus Polyolefinen oder Kunstharzen auf Basis Phenol-Formaldehyd oder Melamin bestehen. Als Material für metallische Verbindungsteile (z. B. für die Verbindung von oberem und unterem Teil der Längswand) und Schrauben haben sich Stahllegierungen der Werkstoff Nr. 1.4439 oder Stähle der Werkstoff Nr. 1.4441 oder 1.4571 bewährt. Zur Vermeidung der in chloridhaltigen Lösungen auftretenden Spannungsrißkorrosion werden die Teile geglüht und gebeizt.

Für einen einwandfreien Betrieb der Lösekammern ist eine über die gesamte Kammerfläche gleichmäßige Soleverteilung von großer Bedeutung. Es ist daher sinnvoll, die Sole am Boden der Lösekammer nicht nur an einem einzigen Punkt einzuleiten. Besonders bewährt hat sich die Maßnahme, die Rohre für die Zuleitung der ungesättigten Sole mit mehreren, regelmäßig angeordneten Austrittsöffnungen zu versehen.

Eine Vergleichmäßigung der Solezufuhr am Fuße der Steinsalzschüttung läßt sich auch erreichen durch Maßnahmen, die den Druckabfall über die Rohrlänge möglichst gering halten; das läßt sich z. B. durch Soleeinspeisung an beiden Längsenden der Rohrleitungen (9) erreichen oder durch Anordnung mehrerer einseitig beaufschlagter Rohre, die nur an bestimmten Abschnitten, jedoch gestaffelt über die gesamte Länge, Austrittsöffnungen aufweisen. Die letztgenannte Variante hat den Vorzug, daß sie eine örtlich gezieltere Solezudosierung ermöglicht.

Im gleichen Sinne wirken Holzbohlen (11), die den Boden der Lösekammer parallel zur Richtung der Rohre (9) in mehrere voneinander getrennte Abschnitte unterteilen. Es ist bevorzugt, daß die Rohre (9) und damit auch die Bohlen (11) in Längsrichtung der Lösekammer angeordnet sind.

Die Austrittsöffnungen der Rohrleitungen (9) liegen vorzugsweise auf der Unterseite der Rohre. Damit die Rohre durch die Steinsalz-Schüttung nicht beschädigt werden, und damit die austretende Dünnsole besser verteilt wird, ist es vorteilhaft, die Rohre (9) für die Zuleitung der ungesättigten Sole, sowie die Bohlen (11) durch einen darüberliegenden Rost abzudecken. Dieser Rost soll aus nebeneinander angeordneten Balken (10) mit Zwischenräumen für den Durchtritt der ungesättigten Sole bestehen. Die Balken (10) des Rostes müssen senkrecht zur Richtung der Rohre (9), im allgemeinen also in Querrichtung der Lösekammer, angeordnet sein. Es ist bevorzugt, die Zwischenräume zwischen 2 Balken (10) kleiner zu bemessen als die Breite der Balken selbst.

Die Rohrleitungen (9) lassen sich aus üblichen, gegenüber Sole beständigen Materialien, wie z. B. Polyolefinen, glasfaserverstärkten Kunstharzen, Titan oder gummiertem Stahl fertigen.

Zur mechanischen Fixierung der Rohre (9), zur Abstützung der Balken (10) und zur gleichmäßigen Verteilung der Soleströmung ist es vorteilhaft, die Rohre in einem Bett aus einem grobkörnigen Feststoff zu verlegen, der gegenüber Sole beständig ist. Als Feststoff läßt sich beispielsweise grobkörniger Koks, vorzugsweise aber Kies einsetzen. Es ist sinnvoll, wenn die Körnung des Feststoffes größer ist als der Zwischenraum zwischen zwei Balken (10). Der Abstand zwischen zwei Balken ist nahezu unabhängig von der Korngröße des verwendeten Steinsalzes und liegt im allgemeinen bei 1 bis 3 cm. Durch diese Maßnahmen läßt sich dem Boden der Lösekammer eine mechanische Haltbarkeit verleihen, die bedarfsweise auch eine Entleerung durch Greiferwerkzeuge ermöglicht.

Es ist bevorzugt in dem durch das Sieb (7) und die Längswand (13) abgegrenzten salzfreien Raum eine Leitung (18) zum Einführen von Dünnsole unterzubringen. Diese Leitung erstreckt sich vorzugsweise (das gleiche gilt auch für das Sieb) über die gesamte Längsseite der Lösekammer. Sinn der Zufuhr von Dünnsole durch diese Leitung (18) ist sowohl die Einstellung der gewünschten Solekonzentration als auch die Mitführung bzw. Nachlösung feinteiliger Feststoffteilchen, bestehend aus Gangart und/oder Salz. Auf diese Weise wird sowohl die Abscheidung feinteiliger Gangart, die aufgrund der geringen Strömungsgeschwindigkeiten nach Passieren des Siebes stattfinden kann, als auch das Auskristallisieren der gesättigten Sole, z. B. durch Abkühlung, vermieden. Die im Elektrolyseprozeß bevorzugte Solekonzentration beträgt 305 bis 310 g Natriumchlorid pro Liter.

Um die Ablagerung von feinteiliger Gangart zu verhindern, ist es vorteilhaft, die Dünnsole aus der Leitung (18) durch Öffnungen auf der Unterseite der Leitung mit hoher Strömungsgeschwindigkeit austreten zu lassen. Die Versorgung der Leitung (18) mit Dünnsole kann beispielsweise von beiden Stirnseiten her erfolgen. Bei Zuführung von nur einer Stirnseite her, ist darauf zu achten, daß der Druckabfall über die gesamte Rohrlänge etwa gleichmäßig erfolgt und auch das dem Rohsoleauslauf entgegengesetzte Ende der Rohrleitung noch ausreichend mit Dünnsole versorgt wird. Es ist bevorzugt, den Boden der Lösekammer in Längsrichtung mindestens 2° gegenüber der Horizontalen zu neigen.

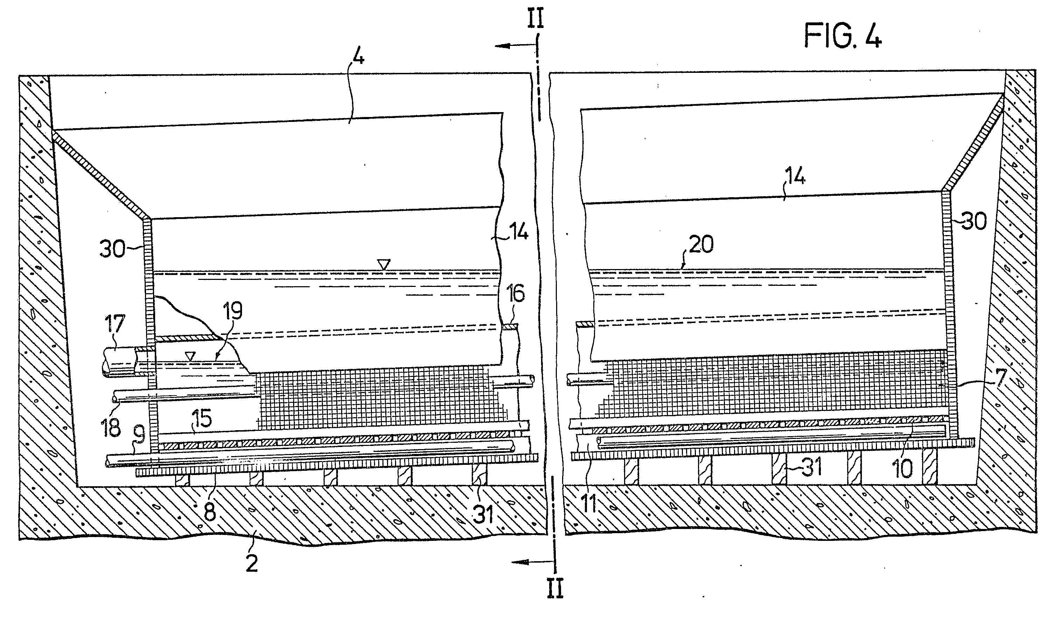

In Fig. 4 ist eine Lösekammer im Längsschnitt gezeigt. Die Schnittebene wird in Fig. 2 mit »IV« bezeichnet. Die mit »II« bezeichnete Schnittebene ist die Zeichenebene von Fig. 2. Es bedeutet (30) die Stirnwände der Kammer und (31) Holzstützen für den Boden (8). In der Figur nimmt die Höhe der Stützen (31) gleichmäßig zu. Selbstverständlich könnte bereits die Tasse (2) eine Neigung gegen die Horizontale aufweisen und die Stützen (31) konstante Höhe besitzen. Die Rohsole verläßt die Lösekammer durch die Leitung (17) an der linken Stirnwand.

Die spezifische Lösekapazität einer Lösekammer ist definiert durch das Verhältnis Rohsolestrom (m³/h) zu Kammerfläche (m²). Sie ist um so höher, je kleiner (bei konstanter Siebfläche) die Grundfläche der Kammer ist. Einer beliebigen Verkleinerung der Grundfläche stehen jedoch wirtschaftliche Gesichtspunkte entgegen, da mit abnehmender Breite der einzelnen Kammer und zunehmender Anzahl der Kammern (Konstanthaltung der Grundfläche) der konstruktive Aufwand für den Bau der Wände der Lösekammern und deren statische Abstützung immer mehr wächst. Es ist bevorzugt, wenn der Grundriß der Lösekammer rechteckig ist und das Verhältnis Länge : Breite größer als 2 : 1 ist. Ein wirtschaftlicher Kompromiß entspricht einem Verhältnis Länge : Breite von 2 : 1 bis 5 : 1, insbesondere 2,9 : 1 bis 2,3 : 1.

Die freie Siebfläche (im allgemeinen wird man beide Längsseiten einer Kammer mit Sieben versehen) läßt sich ebenfalls nicht beliebig erhöhten.

Das Verhältnis freie Siebfläche/Kammergrundfläche soll zwar zur Erreichung einer hohen spezifischen Lösekapazität möglichst hoch liegen. Ein hohes Verhältnis bedingt aber auch höhere Investitionskosten. Aus diesem Grund wird man sich in der Praxis mit Verhältnissen von 1 : 4 bis 1 : 8 zufriedengeben. Falls die Siebe so lang sind wie die Lösekammer, läßt sich dieses Verhältnis auch darstellen durch den Ausdruck $H_s \cdot a \cdot n : B_k$, wobei $H_s$ die Höhe eines Siebes, a das Verhältnis freie Siebfläche zu geometrischer Siebfläche, n die Anzahl der Siebe pro Kammer und $B_k$ die Breite einer Lösekammer bedeutet.

Die Höhe der Siebe wird in erster Linie durch die mechanische Festigkeit begrenzt, so daß zur Zeit Siebhöhen von 1,5 m vorteilhaft sind. Insbesondere stoßartige Druckbelastungen beim Befüllen der Kammern mit Salz erfordern eine mechanische Festigkeit, die mit der hohen Filterleistung der heute zur Verfügung stehenden Siebe (Verhältnis der freien Siebfläche zur geometrischen Siebfläche etwa 50%) kaum mehr vereinbar ist. Eine weitere Erhöhung der Siebhöhe geht daher zunächst auf Kosten des gewünschten hohen Anteils an freier Siebfläche und vergrößert die spezifische Filterleistung kaum mehr.

Die Höhe der Kammern kann ebenfalls den Soledurchsatz beeinflussen. Ein zunehmender Flüssigkeitsstand bewirkt nämlich einen erhöhten hydrostatischen Druck und daher eine gewisse Steigerung des Soledurchsatzes. Insoweit wäre ein hohes Verhältnis Kammerhöhe/Kammerbreite vorteilhaft. Im allgemeinen reichen jedoch Werte von 0,2 : 1 bis 0,5 : 1, insbesondere 0,25 : 1 bis 0,4 : 1 für dieses Verhältnis aus. Erheblich höhere Werte führen zu einem unwirtschaftlich hohen konstruktiven Aufwand für Verstärkungen der Kammerwände. Erheblich niedrigere Werte für dieses Verhältnis engen die Möglichkeiten, die Standhöhe der Sole in der Kammer zu variieren, zu sehr ein.

Es ist bevorzugt, die Siebe an der Längsseite der Lösekammer als Spaltsiebe auszubilden. Die Profilstäbe, aus denen sich das Spaltsieb zusammensetzt, sollen in eingebautem Zustand vertikal angeordnet sein. Zur Erhöhung der mechanischen Stabilität können die Siebe als Rahmenkonstruktion ausgeführt und durch vertikale Bleche an den Kammerwänden abgestützt werden. Darüber hinaus ist es vorteilhaft, wenn die Profilstäbe vom Spaltsieben zusätzlich durch Querverstrebungen abgestützt sind.

Erwünscht ist eine möglichst hohe freie Siebfläche und eine ausreichend enge Spaltbreite, um den Durchtritt der Salzkristalle zu verhindern. Beispielsweise sind für ein Steinsalz mit dem Verteilungsspektrum

| | |
|---|---|
| über 3 mm | 13 – 18 Gew.-% |
| 2 – 3 mm | 16 – 22 Gew.-% |
| 1 – 2 mm | 23 – 27 Gew.-% |
| 0,5 – 1 mm | 18 – 22 Gew.-% |
| 0,25 – 0,5 mm | 9 – 13 Gew.-% |
| 0,125 – 0,5 mm | 4 – 8 Gew.-% |
| unter 0,25 mm | 0 – 4 Gew.-% |

Spaltbreiten von 1 bis 2,2 mm, vorzugsweise 1,6 bis 2,0 mm, geeignet. Bei einer Spaltweite von 2 mm und einer Profilstabbreite von 1,6 mm (bzw. 2,5 mm) beträgt dann die freie Siebfläche 55% (bzw. 44%) der geometrischen Siebfläche. Für eine hohe spezifische Lösekapazität ist es erwünscht, wenn die Breite der Profilstäbe des Spaltsiebes und ihr Abstand so bemessen werden, daß das Verhältnis der freien Siebfläche zur geometrischen Siebfläche mindestens 0,25 : 1, besser aber mindestens 0,4 : 1, beträgt. Besonders bevorzugt ist ein Verhältnis von 0,45 : 1 bis 0,55 : 1.

Es ist vorteilhaft, wenn die Profilstäbe eines Spaltsiebes einen langgestreckten Querschnitt aufweisen und mindestens eine Schmalseite plan ist und senkrecht zur Längsachse des Querschnitts steht. Durch diese Gestaltgebung wird erreicht, daß die einzelnen Profilstäbe dem mechanischen Druck des Salzbreis besser standhalten können und die Gefahr eines Zusetzers der Siebfläche durch Gangart-Teilchen oder Steinsalzkristalle stark vermindert wird. Es ist ferner vorteilhaft, wenn die planen Schmalseiten der Profilstäbe eines Spaltsiebes in einer, die wirksame Siebfläche darstellenden Ebene liegen. Diese Ebene soll dann beim Betrieb des Siebes dem Innern der Lösekammer zugewandt sein. Die Gefahr des Zusetzens des Spaltsiebes kann weiter vermindert werden, wenn die Profilstäbe sich auf der Seite verjüngen, die dem Innern der Lösekammer abgewandt ist.

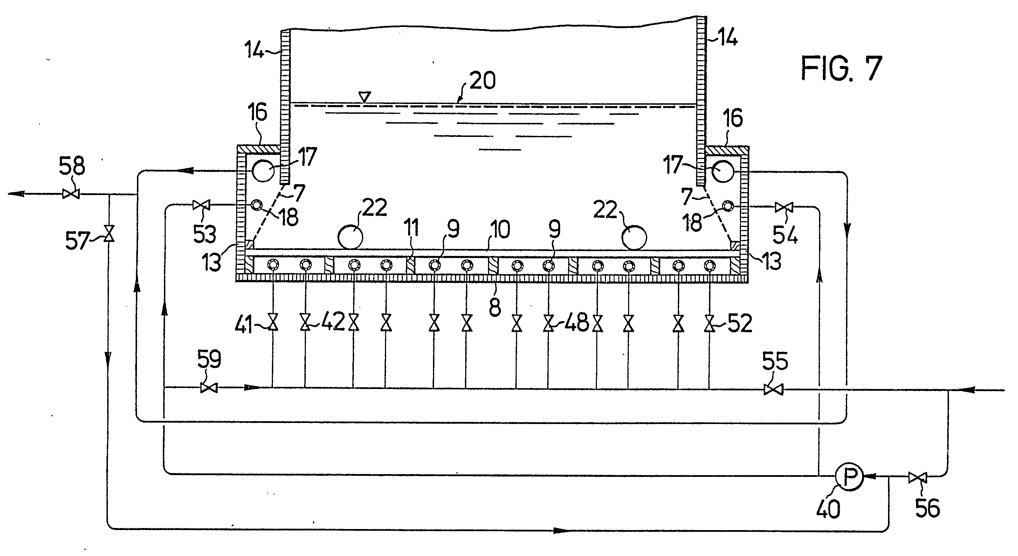

Fig. 5 zeigt einen Schnitt durch ein Spaltsieb. Dabei bedeuten (32) Profilstäbe mit einer planen Stirnfläche und sich verjüngenden Profil und (33) Profil-Querstäbe. Die Pfeile geben die Fließrichtung der Sole an.

Für die Siebe können die gleichen Werkstoffe verwendet werden wie für die metallischen Verbindungsbolzen und Schrauben der Holzkonstruktion; selbstverständlich besteht die Möglichkeit, unedlere Stahlsorten in Verbindung mit kathodischem Schutz einzusetzen. Als Opferanode eignet sich beispielsweise normaler Kohlenstoffstahl.

Beim Betrieb der erfindungsgemäßen Apparatur sollte darauf geachtet werden, daß die Rohsoleseite (Außenseite) der Siebe auf der gesamten Höhe durch Rohsole bedeckt ist, da andernfalls nach kurzer Betriebszeit durch Auskristallisieren von Salz auf der trockenliegenden Siebfläche die freie Durchtrittsfläche wesentlich vermindert wird. Eine ausreichende Höhe des Rohsolespiegels ist gewährleistet durch einen entsprechenden Abstand der Rohsole-Ablauföffnungen (19) vom Boden oder eine der bekannten Maßnahmen zur Standhaltung.

Einige mögliche Anordnungen eines Siebes gehen aus Fig. 6 hervor. Ein Sieb (7) kann mit seinem oberen Rand an einem ins Innere der Lösekammer ragenden Vorsprung (34) der Längswand (13A) befestigt werden. Dabei kann der untere Rand des Siebes an der Längswand befestigt werden (dargestellt in Fig. 6A) oder am Bodenrost (10) oder an der Kante von Bodenrost und Längswand. Es ist bevorzugt, die Längswand der Lösekammer so zu konstruieren, daß sie aus einem oberen Teil (14) und einem unteren Teil (13) besteht, wobei der obere Rand des Siebes an der unteren Kante des oberen Teils der Längswand befestigt ist und der untere Teil der Längswand, bezogen auf den oberen Teil, seitlich nach außen versetzt angeordnet ist (dargestellt in Fig. 6B und 6C). Diese Aufteilung erlaubt ebenfalls eine schräge Anordnung der Siebe.

Dabei kann das Sieb am unteren Teil der Längswand (13) befestigt werden oder direkt am Bodenrost (10) (dargestellt in Fig. 6B). In diesem Fall soll der zwischen Sieb (7) und unterem Teil der Längswand liegende Teil von (10) nicht als Rost ausgebildet sein und keine Dünnsole durchtreten lassen. Bevorzugt ist eine Befestigung des Siebs an der von (13) und (10) gebildeten Kante (dargestellt in Fig. 6C).

Um große Siebbreiten realisieren zu können, ist es vorteilhaft, wenn der untere Teil (13) der Längswand die Unterkante des oberen Teils (14) überragt. Zur Vergrößerung der Siebfläche bei vorgegebener Bauhöhe und um zu verhindern, daß das Sieb durch eine aufliegende Steinsalz-Schüttung mechanisch geschädigt wird, ist es vorteilhaft, wenn die Siebe schräg nach innen geneigt sind, d. h. zwischen Sieb und der Bodenfläche im Inneren der Lösekammer ein spitzer Winkel besteht.

Die Leitungsführung von Dünnsole und Rohsole beim Löse- und Nachlösebetrieb vor der Gangartentleerung ist schematisch in Fig. 7 anhand einer Lösekammer mit 12 Zuführungen für Dünnsole am Boden dargestellt.

Bei normalem Salzlösebetrieb sind Ventile 57 und 59 geschlossen, die Ventile 53 bis 56 und 58 sind geöffnet. Die Ventile der Gruppe 41 bis 52 sind bedarfsweise geöffnet.

Soll das restliche Salz aus der zu entleerenden Gangart herausgelöst werden, so werden Ventile 55, 56 und 58 geschlossen und Ventile 57 und 59 geöffnet. Dabei wird die unvollständig aufgestärkte Sole über Ventil 57, die Pumpe 40 und das Ventil 59 erneut dem Boden der Lösekammer zugeführt. Nach vollständigem Herauslösen des Salzes wird die Gangart durch die Öffnungen 22 ausgeschwemmt.

Die Erfindung wird durch die folgenden Beispiele erläutert:

Beispiel 1

In einer Lösekammer mit der Bodenfläche 16,62 × 7,22 m, mit einer Neigung von 3° in Längsrichtung und einer senkrechten Wandhöhe von 2,36 m wurde über 32 Tage ein ununterbrochener Lösebetrieb aufrechterhalten. Verwendet wurde ein Spaltsieb mit einer Siebhöhe von $H_s$ von 1,17 m und 51,6% freiem Siebquerschnitt. Die Spaltweite des Siebes betrug 1,6 mm.

Das eingesetzte Steinsalz hatte die folgende durchschnittliche Kornverteilung:

| | |
|---|---|
| >3 mm | 17,7 Gew.-% |
| 2−3 mm | 21,2 Gew.-% |
| 1−2 mm | 24,0 Gew.-% |

| 0,5 – 1 mm | 19,7 Gew.-% |
|---|---|
| 0,25 – 0,5 mm | 9,8 Gew.-% |
| 0,125 – 0,25 mm | 5,6 Gew.-% |
| <0,125 mm | 2,1 Gew.-% |

Nach einer Erstbefüllung mit ca. 350 t Steinsalz wurde Dünnsole in die Kammer eingeleitet. Nach 5 Stunden erreichte die ablaufende Rohsole eine Konzentration von 306 g/l. Im Abstand von 10 bis 14 Stunden wurde die Salzbefüllung regelmäßig ergänzt. Über die gesamte Laufzeit des Versuches ergaben sich folgende durchschnittliche Betriebsdaten:

| Dünnsoletemperatur | 69,7° C |
|---|---|
| Dünnsolekonzentration | 273,9 g NaCl/l |
| Rohsoletemperatur | 67,8° C |
| Rohsolekonzentration | 309,4 g NaCl/l |
| Soledurchflußmenge | 255 m³/h |

Dem entspricht eine Lösekapazität von 9 t NaCl/h. Die Rohsole war optisch klar und frei von Feststoffen. Nach 32 Tagen wurde die Nachdosierung von Salz eingestellt. Danach sank die Rohsolekonzentration nach ca. 16 h unter 300 g NaCl/l. Daraufhin wurde die ablaufende Rohsole durch eine Druckerhöhungspumpe wieder in die Kammer zurückgeführt und umgewälzt und diese Umwälzung so lange durchgeführt, bis die Konzentration wieder 307 bis 310 g Natriumchlorid/l erreichte. Die Sole wurde dann über die Schieber 22 abgezogen und durch frische Dünnsole ersetzt. Nach neunmaligem Wechsel der Sole wurde durch sukzessive Dünnsolezufuhr über die Ventile 41 bis 52 die Gangart, die sich am Boden bis zu ca. 50 cm Höhe abgelagert hatte, durch die geöffneten Schieber 22 ausgeschwemmt.

## Beispiel 2

Die Apparatur von Beispiel 1 wurde 8 Tage lang mit dem maximal möglichen Soledurchsatz betrieben. Dabei wurden im Durchschnitt 295 m³/h Rohsole mit 308,4 g NaCl/l gemessen. Die Lösekapazität betrug dabei 11 t NaCl/h. Im Mittel war die erhaltene Rohsole um 1,1° C kälter als die eingesetzte Dünnsole.

## Patentansprüche

1. Verfahren zur brüdenfreien Herstellung konzentrierter, wäßriger Natriumchlorid-Rohsole durch kontinuierliche Auflösung von Steinsalz in einer offenen Lösekammer (1a – 1d), die eine Steinsalz-Schüttung (6) enthält, wobei die an Salz ungesättigte Sole mit der Steinsalz-Schüttung in Kontakt kommt, sich dabei mit Natriumchlorid sättigt und die Lösekammer (1a – 1d) wieder verläßt, dadurch gekennzeichnet, daß die an Salz ungesättigte Sole am Boden der Lösekammer (1a – 1d) eintritt, die gesättigte Rohsole vom Steinsalz durch mindestens ein vertikales oder geneigtes Sieb (7) abgezogen wird, welches suspendierte Steinsalz-Teilchen weitgehend zurückhält, der Flüssigkeitsspiegel (20) der gesättigten Rohsole in der Lösekammer (1a – 1d) die Oberfläche der Steinsalz-Schüttung nicht erreicht und die dem Inneren der Lösekammer (1a – 1d) zugewandte Seite des Siebes (7) vollständig mit einem Gemisch aus gesättigter Rohsole und Steinsalz bedeckt ist.

2. Verfahren nach Anspruch 1, dadurch gekennzeichnet, daß die erhaltene gesättigte Rohsole nach Passieren des Siebes (7) noch im Bereich der Siebfläche mit an Salz ungesättigter Sole auf 305 bis 310 g/l Natriumchlorid verdünnt wird.

3. Verfahren nach Anspruch 1, dadurch gekennzeichnet, daß die Entnahme der konzentrierten Rohsole aus der Lösekammer (1a – 1d) so erfolgt, daß die dem Inneren der Lösekammer abgewandte Seite des Siebes (7) ständig unter Sole steht.

4. Apparatur zur brüdenfreien Herstellung konzentrierter, wäßriger Natriumchlorid-Rohsole, bestehend aus einer Lösekammer (1a – 1d) zum Auflösen von Steinsalz mit Vorrichtungen zum Zuführen von an Salz ungesättigter Sole und zur Abführung von gesättigter Rohsole, dadurch gekennzeichnet, daß auf dem Boden (8) der Lösekammer (1a – 1d) Rohre (9) für die Zuleitung von ungesättigter Sole angeordnet sind, die Lösekammer (1a – 1d) einen langgestreckten Grundriß aufweist und in Längsrichtung der Lösekammer (1a – 1d) mindestens 1 vertikales oder geneigtes Sieb (7) angeordnet ist, das für Sole, aber nicht für Steinsalz durchlässig ist, und das in der Lösekammer (1a – 1d) einen salzfreien Raum abgrenzt.

5. Apparatur gemäß Anspruch 4, dadurch gekennzeichnet, daß die Rohre (9) für die Zuleitung der ungesättigten Sole mit mehreren, regelmäßig angeordneten, Austrittsöffnungen versehen sind.

6. Apparatur nach Anspruch 4, dadurch gekennzeichnet, daß die Rohre (9) für die Zuleitung der ungesättigten Sole in Längsrichtung der Lösekammer (1a – 1d) angeordnet sind.

**0 035 695**

7. Apparatur nach Anspruch 4, dadurch gekennzeichnet, daß die Rohre (9) für die Zuleitung der ungesättigten Sole durch einen darüberliegenden Rost abgedeckt sind.

8. Apparatur gemäß Anspruch 7, dadurch gekennzeichnet, daß der Rost aus nebeneinander angeordneten Balken (10) mit Zwischenräumen für den Durchtritt der ungesättigten Sole besteht.

9. Apparatur gemäß Anspruch 8, dadurch gekennzeichnet, daß die Balken (10) in Querrichtung zur Lösekammer (1a – 1d) angeordnet sind.

10. Apparatur gemäß Anspruch 8, dadurch gekennzeichnet, daß die Zwischenräume zwischen den Balken (10) kleiner sind als die Breite der Balken (10).

11. Apparatur gemäß Anspruch 8, dadurch gekennzeichnet, daß die Rohre (9) für die Zuleitung der ungesättigten Sole in einem Bett aus einem grobkörnigen, gegen Sole beständigen Feststoff verlegt sind.

12. Apparatur gemäß Anspruch 11, dadurch gekennzeichnet, daß der grobkörnige Feststoff Kies ist.

13. Apparatur gemäß Anspruch 12, dadurch gekennzeichnet, daß die Körnung des Kieses größer ist als der Abstand der Zwischenräume zwischen den Balken.

14. Apparatur gemäß Anspruch 4, dadurch gekennzeichnet, daß in dem durch das Sieb (7) abgegrenzten salzfreien Raum eine Leitung (18) zum Einführen von Dünnsole untergebracht ist.

15. Apparatur gemäß Anspruch 4, dadurch gekennzeichnet, daß der Boden (8) der Lösekammer (1a – 1d) in Längsrichtung mindestens 2° gegenüber der Horizontalen geneigt ist.

16. Apparatur gemäß Anspruch 4, dadurch gekennzeichnet, daß der Grundriß der Lösekammer (1a – 1d) rechteckig ist und das Verhältnis Länge : Breite größer als 2 : 1 ist.

17. Apparatur gemäß Anspruch 4, dadurch gekennzeichnet, daß die Siebe (7) an den Längsseiten der Lösekammer (1a – 1d) als Spaltsiebe (Fig. 5) ausgestaltet sind.

18. Apparatur gemäß Anspruch 17, dadurch gekennzeichnet, daß die Spaltsiebe (Fig. 5) aus Profilstäben (32) aufgebaut sind, die noch Querverstrebungen (33) besitzen können und die Profilstäbe (32) beim eingebauten Sieb vertikal angeordnet sind.

19. Apparatur gemäß Anspruch 18, dadurch gekennzeichnet, daß die Breite der Profilstäbe (32) und ihr Abstand so bemessen werden, daß das Verhältnis der freien Siebfläche zur geometrischen Siebfläche mindestens 0,25 : 1 beträgt.

20. Apparatur gemäß Anspruch 18, dadurch gekennzeichnet, daß die Profilstäbe (32) einen langgestreckten Querschnitt aufweisen und mindestens eine Schmalseite plan ist und senkrecht zur Längsachse des Querschnitts steht.

21. Apparatur gemäß Anspruch 20, dadurch gekennzeichnet, daß die planen Schmalseiten der Profilstäbe (32) in einer, die wirksame Siebfläche darstellenden Ebene liegen, die dem Inneren der Lösekammer (1a – 1d) zugewandt ist.

22. Apparatur gemäß Anspruch 20, dadurch gekennzeichnet, daß die Profilstäbe (32) sich auf der Seite verjüngen, die dem Inneren der Lösekammer (1a – 1d) abgewandt ist.

23. Apparatur gemäß Anspruch 4, dadurch gekennzeichnet, daß das Sieb (7) mit seinem oberen Rand an der Längswand der Lösekammer (1a – 1d) befestigt ist.

24. Apparatur gemäß Anspruch 23, dadurch gekennzeichnet, daß die Längswand aus einem oberen (14) und einem unteren Teil (13) besteht, der obere Rand des Siebs an der unteren Kante des oberen Teils (14) der Längswand befestigt ist, und der untere Teil (13) der Längswand, bezogen auf den oberen Teil seitlich nach außen versetzt angeordnet ist.

25. Apparatur gemäß Anspruch 23 oder 24, dadurch gekennzeichnet, daß der untere Rand des Siebs (7) mit dem Boden (8) der Lösekammer (1a – 1d) verbunden ist.

26. Apparatur gemäß Anspruch 23, dadurch gekennzeichnet, daß der untere Teil (13) der Längswand die Unterkante des oberen Teils (14) überragt.

27. Apparatur gemäß Anspruch 4, dadurch gekennzeichnet, daß das Sieb (7) so geneigt ist, daß zwischen Sieb (7) und der Bodenfläche im Innern der Lösekammer ein spitzer Winkel besteht.

**Claims**

1. A process for the vapor-free production of concentrated aqueous sodium chloride crude brine by continuously dissolving rock salt in an open dissolving chamber (1a – 1d) containing a heap of rock salt (6), the brine which is unsaturated in respect of salt coming into contact with the heap of rock salt, becoming saturated thereby with sodium chloride and then passing out of the dissolving chamber (1a – 1d), which process comprises the steps of introducing brine which is unsaturated in respect of salt at the base of the dissolving chamber (1a – 1d); withdrawing the saturated crude brine from the rock salt by means of at least one vertical or inclined screen (7) which largely holds back suspended rock salt particles; and maintaining the level (20) of the saturated crude brine in the dissolving chamber (1a – 1d) below the surface of the heap of rock salt and covering the side of the screen (7) which faces the interior of the dissolving chamber (1a – 1d) completely with a mixture of saturated crude brine and rock salt.

2. A process as claimed in claim 1, wherein the resulting saturated crude brine, after passing through the screen (7), is further diluted to 305 to 310 g/l of sodium chloride, in the region of the screen surface,

8

**0 035 695**

with unsaturated brine.

3. A process as claimed in claim 1, wherein the concentrated crude brine is withdrawn form the dissolving chamber (1a—1d) at such a rate that the side of the screen (7) which is turned away from the interior of the dissolving chamber is continuously covered with brine.

4. Apparatus for the vapor-free production of concentrated aqueous sodium chloride crude brine, comprising a dissolving chamber (1a—1d) for dissolving rock salt which is equipped with appliances for feeding in brine which is unsaturated in respect of salt and for removing saturated crude brine, wherein pipes (9) for the admission of unsaturated brine are installed on the floor (8) of the dissolving chamber (1a—1d), the dissolving chamber (1a—1d) has an elongate layout and at least one vertical or inclined screen (7) which is permeable to brine, but not to rock salt and which delimits a salt-free space in the dissolving chamber (1a—1d), is installed longitudinally in the dissolving chamber (1a—1d).

5. Apparatus as claimed in claim 4, wherein the pipes (9) for the admission of the unsaturated brine are provided with several outlet apertures, arranged at regular intervals.

6. Apparatus as claimed in claim 4, wherein the pipes (9) for the admission of the unsaturated brine are installed longitudinally in the dissolving chamber (1a—1d).

7. Apparatus as claimed in claim 4, wherein the pipes (9) for the admission of the unsaturated brine are covered by a grid which is on top of them.

8. Apparatus as claimed in claim 7, wherein the grid comprises beams (10) which are arranged side by side, with interspaces for the passage of the unsaturated brine.

9. Apparatus as claimed in claim 8, wherein the beams (10) are installed transversely in the dissolving chamber (1a—1d).

10. Apparatus as claimed in claim 8, wherein the interspaces between the beams (10) are smaller than the width of the beams (10).

11. Apparatus as claimed in claim 8, wherein the pipes (9) for the admission of the unsaturated brine are laid in a bed composed of a coarsely granular solid which is resistant to brine.

12. Apparatus as claimed in claim 11, wherein the coarsely granular solid is gravel.

13. Apparatus as claimed in claim 12, wherein the grain size of the gravel is larger than the spacing of the interspaces between the beams.

14. Apparatus as claimed in claim 4, wherein a line (18) for feeding in dilute brine is accomodated in the salt-free space delimited by the screen (7).

15. Apparatus as claimed in claim 4, wherein the floor (8) of the dissolving chamber (1a—1d) is inclined, in the longitudinal direction, at an angle of at least 2° to the horizontal.

16. Apparatus as claimed in claim 4, wherein the dissolving chamber (1a—1d) has a rectangular layout and the ratio of length to width is greater than 2 : 1.

17. Apparatus as claimed in claim 4, wherein the screen (7) on the longitudinal faces of the dissolving chamber (1a—1d) is constructed in the form of a split screen (Fig. 5).

18. Apparatus as claimed in claim 17, wherein the split screen (Fig. 5) is constructed of profile rods (32) which can also have transverse struts (33), and the profile rods (32) are arranged vertically in the screen when the latter is installed.

19. Apparatus as claimed in claim 18, wherein the width of the profile rods (32) and their spacing are so dimensioned that the ratio of the free screen area to the geometrical screen area is at least 0.25 : 1.

20. Apparatus as claimed in claim 18, wherein the profile rods (32) have an elongate cross-section and at least one narrow face is flat and is arranged vertically to the longitudinal axis of the cross-section.

21. Apparatus as claimed in claim 20, wherein the flat narrow faces of the profile rods (32) lie in a plane which constitutes the effective screen surface and which faces the interior of the dissolving chamber (1a—1d).

22. Apparatus as claimed in claim 20, wherein the profile rods (32) taper on the side which faces away from the interior of the dissoving chamber (1a—1d).

23. Apparatus as claimed in claim 4, wherein the screen (7) is fastened by its upper edge to the longitudinal wall of the dissolving chamber (1a—1d).

24. Apparatus as claimed in claim 23, wherein the longitudinal wall comprises an upper (14) and a lower part (13), the upper edge of the screen is fastened to the lower edge of the upper part (14) of the longitudinal wall and the lower part (13) of the longitudinal wall is displaced sideways towards the outside, relative to the upper part.

25. Apparatus as claimed in either of claims 23 or 24, wherein the lower edge of the screen (7) is attached to the floor (8) of the dissolving chamber (1a—1d).

26. Apparatus as claimed in claim 23, wherein the lower part (13) of the longitudinal wall rises above the lower edge of the upper part (14).

27. Apparatus as claimed in claim 4, wherein the screen (7) is inclined in such a way that there is an acute angle between the screen (7) and the floor suface in the interior of the dissolving chamber.

9

## Revendications

1. Procédé pour préparer sans fumées de la saumure aqueuse brute concentrée en chlorure de sodium, par dissolution continue de sel gemme dans une chambre de dissolution ouverte (1a à 1d), qui contient un chargement (6) de sel gemme, procédé selon lequel la saumure non saturée en sel vient en contact avec le chargement de sel gemme, se sature ainsi en chlorure de sodium et quitte à nouveau la chambre de dissolution (1a à 1d), procédé caractérisé en ce que la saumure insaturée en sel pénètre au fond de la chambre de dissolution (1a à 1d); la saumure brute saturée est séparée du sel gemme par au moins un tamis (7) vertical ou incliné, qui retient dans une large mesure les particules de sel gemme en suspension; le niveau (20) de la saumure brute liquide saturée n'atteint pas dans la chambre de dissolution (1a à 1d) la surface du chargement en sel gemme; et le côté du tamis (7), tourné vers l'intérieur de la chambre de dissolution (1a à 1d) est entièrement couvert d'un mélange de saumure brute saturée et de sel gemme.

2. Procédé selon la revendication 1, caractérisé en ce que la saumure brute saturée que l'on obtient est diluée, après sa traversée du tamis (7), encore dans la zone de la surface du tamis par de la saumure insaturée en sel, pour parvenir à une concentration de 305 à 310 g de chlorure de sodium par litre.

3. Procédé selon la revendication 1, caractérisé en ce qu'on effectue l'enlèvement de la saumure brute concentrée de la chambre de dissolution (1a à 1d) de manière que le côté du tamis (7) éloigné de l'intérieur de la chambre de dissolution se trouve toujours recouvert de saumure.

4. Appareillage pour préparer sans fumées ou vapeurs de la saumure aqueuse brute concentrée en chlorure de sodium, cet appareillage consistant en une chambre de dissolution (1a à 1d) pour dissoudre le sel gemme et en des dispositifs pour introduire de la saumure non saturée en sel et pour retirer de la saumure brute saturée, appareillage caractérisé en ce que des tubes (9) sont disposés sur le fond (8) de la chambre de dissolution (1a à 1d) pour introduire la saumure insaturée; la chambre de dissolution (1a à 1d) présente une forme de base allongée; et dans le sens de la longueur de la chambre de dissolution (1a à 1d), il y a au moins un tamis (7) vertical ou incliné, qui laisse passer la saumure mais non le sel gemme; et qui délimite dans la chambre de dissolution (1a à 1d) un espace sans sel.

5. Appareillage selon la revendication 4, caractérisé en ce que les tubes (9) pour l'introduction de la saumure insaturée comportent plusieurs orifices de sortie, ménagés à intervalles réguliers.

6. Appareillage selon la revendication 4, caractérisé en ce que les tubes (9) pour l'introduction de la saumure insaturée sont disposés dans le sens de la longueur de la chambre de dissolution (1a à 1d).

7. Appareillage selon la revendication 4, caractérisé en ce que les tubes (9) d'introduction de la saumure non saturée sont recouverts par une grille placée par-dessus ces tubes.

8. Appareillage selon la revendication 7, caractérisé en ce que la grille consiste en des traverses (10) disposées côte à côte et présentant des intervalles permettant le passage de la saumure non saturée.

9. Appareillage selon la revendication 8, caractérisé en ce que les traverses (10) sont disposées dans le sens transversal de la ou des chambres de dissolution (1a à 1d).

10. Appareillage selon la revendication 8, caractérisé en ce que les intervalles entre les traverses (10) sont inférieurs à la largeur des traverses (10).

11. Appareillage selon la revendication 8, caractérisé en ce que les tubes (9) pour l'introduction de la saumure non saturée sont enfouis dans un lit d'une matière solide à gros grains, capable de résister à la saumure.

12. Appareillage selon la revendication 11, caractérisé en ce que la matière solide en gros grains est du gravier.

13. Appareillage selon la revendication 12, caractérisé en ce que la grosseur des grains du gravier est supérieure à l'intervalle séparant les traverses.

14. Appareillage selon la revendication 4, caractérisé en ce qu'un conduit (18) pour l'introduction de la saumure diluée est placé dans l'espace sans sel limité par le tamis (7).

15. Appareillage selon la revendication 4, caractérisé en ce que le fond (8) de la ou des chambres de dissolution (1a à 1d) est incliné dans le sens de la longueur d'au moins 2° sur l'horizontale.

16. Appareillage selon la revendication 4, caractérisé en ce que la forme de base de la ou des chambres de dissolution (1a à 1d) est rectangulaire et en ce que le rapport de leur longueur à leur largeur est supérieur à 2 : 1.

17. Appareillage selon la revendication 4, caractérisé en ce que, vers les côtés longitudinaux de la chambre de dissolution (1a à 1d), le tamis (7) est réalisé sous forme d'un tamis à barreaux (figure 5).

18. Appareillage selon la revendication 17, caractérisé en ce que le tamis à barreaux (figure 5) est formé de barreaux profilés (32) qui peuvent comporter encore des entretoises transversales (33), et en ce que les barreaux profilés (32) sont disposés verticalement lorsque le tamis est définitivement mis en place.

19. Appareillage selon la revendication 18, caractérisé en ce que la largeur des barreaux profilés (32) et leur écartement sont choisis de façon que le rapport de la surface libre du tamis à sa surface géométrique soit au moins égal à 0,25 : 1.

20. Appareillage selon la revendication 18, caractérisé en ce que les barreaux profilés (32) présentent une section allongée; au moins un de leurs petits côtés est plan et est perpendiculaire à l'axe longitudinal de leur section.

21. Appareillage selon la revendication 20, caractérisé en ce que les petits côtés plans des barreaux profilés (32) se situent dans un plan représentant la surface active du tamis et qui est tourné vers l'intérieur de la ou des chambres de dissolution (1a à 1d).

22. Appareillage selon la revendication 20, caractérisé en ce que les barreaux profilés (32) s'amincissent du côté éloigné de l'intérieur de la ou des chambres de dissolution (1a à 1d).

23. Appareillage selon la revendication 4, caractérisé en ce que le tamis (7) est fixé par son bord supérieur à la paroi longitudinale de la chambre de dissolution (1a à 1d).

24. Appareillage selon la revendication 23, caractérisé en ce que la paroi longitudinale consiste en une partie supérieure (14) et une partie inférieure (13); le bord supérieur du tamis est fixé à l'arête inférieure de la partie supérieure (14) de la paroi longitudinale, et la partie inférieure (13) de la paroi longitudinale est latéralement décalée vers l'extérieur, par rapport à la partie supérieure.

25. Appareillage selon la revendication 23 ou 24, caractérisé en ce que le bord inférieur du tamis (7) est relié au fond (8) de la ou des chambres de dissolution (1a à 1d).

26. Appareillage selon la revendication 23, caractérisé en ce que la partie inférieure (13) de la paroi longitudinale déborde l'arête inférieure de la partie supérieure (14).

27. Appareillage selon la revendication 4, caractérisé en ce que le tamis (7) est incliné de manière qu'il existe un angle aigu entre le tamis (7) et la surface du fond, à l'intérieur de la chambre de dissolution.

FIG. 1

FIG. 5

FIG. 6

IV

FIG. 2

IV

FIG. 3

FIG.4

FIG. 7